Europäisches Patentamt

European Patent Office

Office européen des brevets

(11) Veröffentlichungsnummer: **0 199 317**
**B1**

(12) **EUROPÄISCHE PATENTSCHRIFT** ·

(45) Veröffentlichungstag der Patentschrift: **30.05.90**

(21) Anmeldenummer: **86105440.1**

(22) Anmeldetag: **19.04.86**

(51) Int. Cl.⁵: **G 01 M 17/00**, G 01 M 7/00, G 01 M 13/00

(54) **Prüfstand zur Untersuchung der Betriebsfestigkeit einer Kfz-Einrichtung.**

(30) Priorität: **25.04.85 DE 3515010**

(43) Veröffentlichungstag der Anmeldung:
**29.10.86 Patentblatt 86/44**

(45) Bekanntmachung des Hinweises auf die
Patenterteilung:
**30.05.90 Patentblatt 90/22**

(84) Benannte Vertragsstaaten:
**FR GB IT SE**

(56) Entgegenhaltungen:
**DE-A-3 025 478**
**DE-A-3 405 951**

(73) Patentinhaber: **Bayerische Motoren Werke
Aktiengesellschaft
Patentabteilung AJ-30 Postfach 40 02 40
Petuelring 130
D-8000 München 40 (DE)**

(72) Erfinder: **Kolitsch, Jörg
Schleissheimer Strasse 274/9
D-8000 München 40 (DE)**
Erfinder: **Holzheimer, Georg
Künstlerhof 6
D-8000 München 19 (DE)**
Erfinder: **Hölzlwimmer, Karl
St.-Veit-Strasse 45
D-8000 München 80 (DE)**

(74) Vertreter: **Bücken, Helmut
Bayerische Motoren Werke Aktiengesellschaft
Postfach 40 02 40 Petuelring 130 - AJ-30
D-8000 München 40 (DE)**

Courier Press, Leamington Spa, England.

EP 0 199 317 B1

**Beschreibung**

Die Erfindung bezieht sich auf ein Arbeitsverfahren und einen Prufstand zur Untersuchung einer mit einer Brennkraftmaschine zusammenwirkenden Kfz-Einrichtung nach dem Oberbegriff des Anspruchs 1 bzw. des Anspruchs 3.

Ein Arbeitsverfahren sowie ein Prüfstand hierfür sind in der Fachzeitschrift "Automotive Engineer" Heft Februar/März 1985 auf den Seiten 62 und 63 beschrieben und gezeigt. Das Arbeitsverfahren dient dur Untersuchung der Betriebsfestigkeit einer fahrzeuggemäß ausgebildeten und angeordnet Abgasanlage für eine Kfz-Brennkraftmaschine. Hierbei kann die Abgasanlage in den Prüfstand den aus Fahrzeugbewegungen und den aus Brennkraftmaschinen-Bewegungen herrührenden mechanischen Belastungen ausgesetzt werden. Prinzipiell können auf diesem Prüfstand auch andere Kfz-Einrichtungen den vorgenannten Belastungen zur Untersuchung auf Betriebsfestigkeit ausgesetzt werden.

Für die Simulation der oben genannten Fahrzeug- und Brennkraftmaschinen-Bewegungen sind entsprechende Daten für die Steuerung der jeweiligen Erreger an einem Kraftfahrzeug zu ermitteln. Sollen beide Bewegungsarten in ihrer gegenseitigen Beeinflußung an der Kfz-Einrichtung über das gesamte Fahr-Leistungs-Spektrum des Kraftfahrzeuges erfaßt werden, ist dazu eine große Anzahl Daten eforderlich. Diese Daten allein ergeben für die Untersuchung z.B. einer fahrzeuggemäßen Abgasanlage jedoch keine wirklichkeitsnahe Simulation an Belastungen. Nicht berücksichtigt sind die thermischen und chemischen Beanspruchungen, auch fehlt die Beanspruchung durch die pulsierende Gasströmung der Brennkraftmaschine.

Die vorgenannten Nachteile gelten auch für einen Prüfstand nach der DE—A—30 25 478, der zwar ein gesamtes Fahrzeug aufnimmt, jedoch nur für dynamische Untersuchungen der Radaufhängungen dient. Bei einem aus der DE—A—34 05 957 bekannten Prüfstand zur Aufnahme einer Brennkraftmaschine mit Fahrzeugidentischer Abgasanlage wird zu deren Festigkeits-Untersuchungen mit Spannungsoptischen Beschichtungen die Brennkraftmaschine geschleppt um die vorgenannten Beschichtungen nicht durch heiße Abgase zu schädigen.

Der Erfindung liegt die Aufgabe zugrunde, ein Arbeitsverfahren der eingangs beschriebenen Art so weiterzubilden, daß mit einer Brennkraftmaschine zusammenwirkende Kfz-Einrichtungen, insbesondere eine Abgasanlage, den wirklichen Umständen entsprechend zur Untersuchung auf Betriebsfestigkeit belastet werden können, und einen Prüfstand zur Durchführung dieses Arbeitsverfahrens zu schaffen.

Diese Aufgabe wird durch die Merkmale des Anspruchs 1 bzw. des Anspruchs 3 gelöst.

Gemäß der Erfindung ist eine zur Simulation von Fahrzeugbewegungen dienende Aufnahmevorrichtung mit einem betriebsfähigen Kfz-Antriebsstrang einschließlich betreibbarer Brennkraftmaschine zu einem eine Belastungsmaschine umfassenden Prüfstand vereinigt. Dadurch ist der Antriebsstrang Bestandteil des Prüfstandes, wobei Teile des Antriebsstranges zugleich Untersuchungsobjekte sind. Damit können Kfz-Einrichtungen unter nahezu allen mechanisch-dynamischen, thermischen und chemischen Belastungen wirklichkeitsnah getestet werden. Durch eine frei beeinflußbare Brennkraftmaschine in der simultan Fahrzeugbewegungen ausführenden Aufnahmevorrichtung kann ferner jede gewünschte Korrelation zwischen einem Betriebspunkt in Teil- oder Vollast der Brennkraftmaschine und den fahrbahnerregten, tieffrequenten Schwingungen bzw. Fahrzeugbewegungen bei erträglichem Datenumfang erzeugt werden. Damit können alle wesentlichen externen Belastungsgroßen (Lastzustand und Fahrbahnreaktion) z.B. für den nach Anspruch 2 angegebenen Brennkraftmaschinen-Abgasanlagenkomplex nachgebildet werden, wobei in vorteilhafter Weise sich die internen, d. h. thermischen, chemischen und gasdynamischen Beanspruchungen selbst fahrzeuggerecht einstellen.

Der Prüfstand gemäß Anspruch 3 umfaßt einen beige- und schwingungssteifen Tragrahmen, der eine im Aufbau einfache Aufnahmevorrichtung darstellt. Ein weiterer Vorteil dieses Tragrahmens ergibt sich, wenn dessen parallele Profilträger in ihrem gegenseitigen Abstand auf die Breite des größten Fahrzeugmodelles aus einem verschieden große Fahrzeugmodelle umfassenden Angebot abgestellt werden. Damit können die Antriebstränge kleinerer Fahrzeugmodelle jeweils im gleichen Tragrahmen aufgebaut werden.

Die Anordung des Tragrahmens auf vorzugsweise zwei Servohydraulikzylindern und dessen Halterung über mit Standsäulen verbundenen Führungsstreben nach Anspruch 4 eröffnet die Möglichkeit, den den Tragrahmen und den Antriebsstrang umfassenden Teil des Prüfstandes in eine für die Zugänglichkeit von allen Seiten günstige Position im Raum anzuordnen. Um den Tragrahmen vorteilhaft für mehrere Fahrzeugmodelle mit unterschiedlichem Radstand zu nutzen, können die im Bereich von Vorder- und Hinterachse angreifenden Servohydraulikzylinder in ihrem gegenseitigen Abstand verstellbar angeordnet sein. Bei zwei an einer Achse vorgesehenen Servohydraulikzylindern können diese zusätzlich noch auf die Spurweite einstellbar sein.

Mit der Anordnung mehrerer Untergestelle nach Teilmerkmalen des Anspruches 5 einerseits und der Anordnung mehrerer Schenkel an einem Untergestell nach Anspruch 6 andererseits zur Anbindung an die Profilträger werden bei diesen die freien, schwingfähigen Längen wesentlich verkürzt und somit der Tragrahmen zusätzlich schwingungssteif ausgebildet. Damit können bei einem für Antriebsstränge verschiedener Fahrzeugmodelle geeigneten Tragrahmen aus tieffrequenten, fahrbahnerregten Schwingungen für simultane Fahrzeugbewegungen entstehende Biegeschwingungen sicher vermieden werden, um die über die Servohydraulikzylinder erzeugten Fahrzeugbewegungen nicht durch Überlagerungen zu verfälschen.

Mit der Ausgestaltung nach Anspruch 7 ist der Vorteil eines auswechselbaren Tragrahmens erzielt. Das Auswechseln des Tragrahmens mit installiertem Antriebsstrang wird durch nach Anspruch 8 anordbare und lenkbare Räder zusätzlich gefördert. Bei mehreren Tragrahmen ergibt sich damit der Vorteil, daß neben einem im Prüfstand befindlichen Tragrahmen mit Antriebsstrang der oder die übrigen Tragrahmen während der Testzeit auf- oder umgerüstet werden können.

Um störende Überlagerungen der simultanen Fahrzeugbewegungen andererseits zu vermeiden, ist nach Anspruch 9 eine Versorgungs-, Steuer-und Kontroll-Einrichtung für die betriebsfähige Brennkraftmaschine des Antriebsstranges vom Tragrahmen getrennt angeordnet, wobei die erforderlichen Leitungen beiderseits von am Tragrahmen angeordneten Armaturen frei pendelnd angeordnet sind. Diese Armaturen sind auch im Sinne einer raschen Auswechselbarkeit des mit den Antriebsstrang kombinierten Tragrahmens mit Kupplungen ausgerüstet.

Schließlich umfaßt der Prüfstand nach Anspruch 10 eine für Zug- und Schubbetrieb vorgesehene Belastungsmaschine, wie sie z.B. an sich aus der DE—B—22 39 719 bekannt ist. Vorzugsweise ist diese eine im 4-Quadranten-Betrieb arbeitende Gleichstrommaschine, die es ermöglicht, auch die im Schiebebetrieb des Kraftfahrzeuges auftretenden Belastungen am Antriebsstrang zu simulieren. Die in Richtung einer Radantriebswelle angeordnete, feststehende Belastungsmaschine greift über eine Gleichlaufgelenkwelle an einem Wellenflansch des Achsgetriebes an, dessen Ausgleichsgetriebe gesperrt ist. Zur raschen Auswechselbarkeit des Tragrahmens mit Antriebsstrang von der Belastungsmaschine ist die Gleichlaufgelenkwelle kuppelbar ausgebildet. Anstelle des Achsgetriebes ist auch ein gesondertes Winkelgetriebe im Gehäuse des Achsgetriebes denkbar.

Es ist möglich, einen Antriebsstrang mit Brennkraftmaschine über fahrzeugidentische Aufhängevorrichtungen fahrzeuggemäß unmittelbar am Tragrahmen anzuordnen. Für die Verwendung eines Tragrahmens für unterschiedliche Antriebsstränge sind an den Profilträgern verschiebbar angeordnete Tragelemente zur Nachbildung fahrzeugaufbauseitiger Anschlußpunkte für die jeweiligen fahrzeugidentischen Aufhängevorrichtungen vorteilhaft. Damit können serienmäßige Fahrzeugbauteile des Antriebsstranges als Prüfstandskomponenten verwendet werden. Der Prüfstand ermöglicht es, nicht nur bei einer (zu entwickelnden) Abgasanlage alle relevanten mechanischen, chemischen und thermischen Beanspruchungen wirklichkeitsnah zu simulieren, sondern auch andere Bauteile des Antriebsstranges auf ihre Lebensdauer in Betriebslasten-nach-Fahrversuch zu untersuchen. Dazu gehören alle Motoranbauteile, wie z.B. der Riementrieb für Nebenaggregate, die Lichtmaschinenhalterung, der Motorkühler und alle motorelektrischen Bauteile, die Motortragböcke, der Vorderachsträger, das Schaltgetriebe mit Kupplung, der Getriebequerträger, die Motor- und Getriebegummilager, das Mittellager und die Gelenkwelle. Die Einsatzmöglichkeit des thermisch-mechanischen Aggregate- und Abgasanlagen-Prüfstandes für Betriebsfestigkeitsuntersuchungen ist äußerst vielseitig, neben der klassischen Antriebsanordnung mit Brennkraftmaschine vorne und Antrieb hinten lassen sich auch andere Antriebskonzepte wie für Front- und Allrad-Antrieb überprüfen.

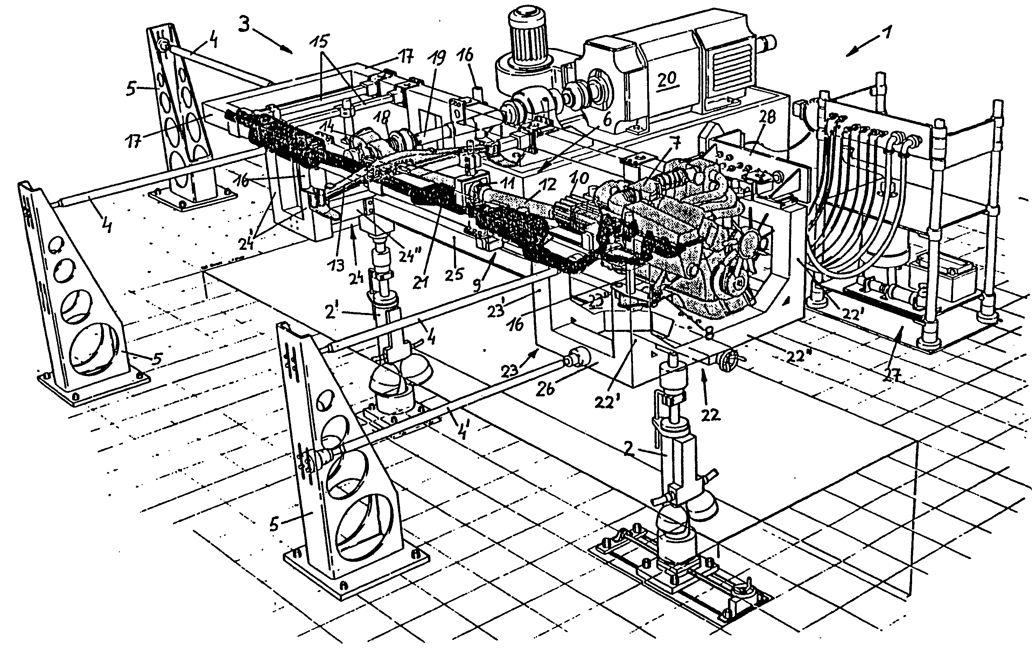

Die Erfindung wir im folgenden anhand eines in der Zeichnung perspektivisch dargestellten Ausführungsbeispiels näher erläutert.

Ein Prüfstand 1 umfaßt einen auf zwei Servohydraulikzylindern 2, 2' angeordneten Tragrahmen 3, wobei der aus Leichtmetall gefertigte Tragrahmen 3 über räumlich verteilt angeordnete Führungsstreben 4, 4' mit feststehenden Standsäulen 5 über zwischengeschaltete Gelenke räumlich beweglich ortsfest gehalten ist. In dem Tragrahmen 3 ist ein betriebsfähiger Kfz-Antriebsstrang 6 mit betreibbarer Brennkraftmaschine 7 über fahrzeugidentische Aufhängevorrichtungen wie Motorträger 8, Querträger 9 für Wechselgetriebe 10, Mittellager 11 für eine geteilte Gelenkwelle 12 und einen Hinterachsträger 13 zum Anschluß eines Achsgetriebes 14 angeordnet. Brückenartige Tragelemente 15 und Einzeltragelemente 16 an parallelen, etwa auf eine Fahrzeugbreite beabstandeten Profilträgern 17 des Tragrahmens 3 verschiebbar angeordnet, dienen zum fahrzeugidentischen Anschluß der vorgenannten Aufhängevorrichtung für den Antriebsstrang 6. Mit einem der Radantrieb-Wellenflansche 18 ist über eine Gleichlaufgelenkwelle 19 eine relativ zum Tragrahmen 3 feststehend angeordnete Belastungsmaschine 20 drehfest gekoppelt, die für Zug- und Schubbetrieb eine in Vier-Quadranten-Betrieb betreibbare Gleichstrommaschine ist. Für wirklichkeitsnahe Untersuchung auf Betriebsfestigkeit einer fahrzeugidentischen und fahrzeugoriginal aufgehängten Abgasanlage 21 bildet der Antriebsstrang 6 mit der betriebsfähigen Brennkraftmaschine 7 in Kombination mit dem Tragrahmen 3 einen Teil des Prüfstandes 1. Hierbei dient die betriebene Original-Brennkraftmaschine 7 als antriebsseitiger Erreger für die Abgasanlage 21.

Simultane Fahrzeugbewegungen werden über die im Radstand eines Fahrzeuges voneinander entfernt angeordneten Servohydraulikzylinder 2, 2' in den Tragrahmen 3 eingeleitet. Dessen Profilträger 17 sind mit Schenkel 22', 23' und 24' von quer zu den Profilträgern 17 angeordneten U-förmigen Untergestellen 22, 23 und 24 fest verbunden, ein die Stege 22'', 23'' und 24'' der vorerwähnten Untergestelle mittig verbindender Längsträger 25 versteift den Tragrahmen 3. Der Tragrahmen weist in einem Endbereich zwei etwa entsprechend der Länge der Brennkraftmaschine 7 beabstandete Untergestelle 22 und 23 auf, die miteinander über einen Abschnitt des Längsträgers 25 und zusätzlich durch in den Endbereichen der Stege 22'' und 23'' fest angeordnete Längsgurte 26 in Verbindung stehen. Am Längsgurt 26 ist eine Anschlußstelle für die weitere Führungsstrebe 4' angeordnet, die mit einer der am Profilträger 17 angreifenden Führungsstrebe 4 eine Parallelführung bildet. Bei dem gezeigten Prüfstand 1 sind die tieffrequenten, fahrbahnerregten Schwingungen, die über den nicht gezeigten Fahrzeugaufbau, den Antriebsstrang 6 und die Aufhängungen der Abgasanlage 21 diese dynamisch belasten, auf die zwei wesentlichen Freiheitsgrade der Vertikalbewegung und der Nickbewegung reduziert.

Das im Bereich des Achsgetriebes 14 angeordnete Untergestell 24 weist in jedem Endbereich seines Steges 24'' zwei im gegenseitigen Abstand am jeweiligen Profilträger 17 angreifende Schenkel 24' auf. Damit sind an den Profilträgern 17 die freien, schwingfähigen Längen wesentlich verkürzt.

Mittels nicht näher gezeigter, schnell lösbarer Kupplungen sowohl für die Servohydraulikzylinder 2, 2' als auch für alle Führungsstreben 4, 4' — die als Stangen oder auch als Servohydraulikzylinder ausgebildet sein können — kann der Tragrahmen 3 mit dem kompletten Antriebsstrang 6 leicht ausgewechselt werden. Der Auswechselbarkeit förderlich sind mit lenkbaren Rädern ausgerüstete Fahrwerke (nicht gezeigt), die mit den Untergestellen 22 und 24 kuppelbar sind.

Schließlich sind am Tragrahmen 3 im Bereich der Brennkraftmaschine 7 Armaturen 28 angeordnet, die mit einer vom Tragrahmen 3 getrennt angeordneten Versorgungs-, Steuer- und Kontroll-Einheit 27 über frei bewegliche Leitungen für motorische Betriebsstoffe sowie Steuer- und Kontrolleinrichtungen einerseits und weiteren, zur Brennkraftmaschine 7 führenden Leitungen andererseits verbindbar sind.

Funktionsweise:

Zur beispielsweisen Untersuchung der Betriebsfestigkeit der Abgasanlage 21 wird diese an die Brennkraftmaschine 7 angeschlossen, die in Verbindung mit einem betriebsfähigen Antriebsstrang 6 fahrzeugidentisch im Tragrahmen 3 angeordnet ist. In den über die Führungsstreben 4, 4', räumlich beweglich ortsfest gehaltenen Tragrahmen 3 werden aus dem Spektrum der Fahrzeugbewegungen vorzugsweise Vertikal- und Nichbewegungen über die Servohydraulikzylinder 2, 2' eingeleitet.

Zu den fahrzeugdynamischen Belastungen der Abgasanlage 21 treten die mechanischen, thermischen, chemischen und gasdynamischen Belastungen der in Betrieb gesetzten Brennkraftmaschine 7, die als antriebsseitiger Erreger dient. Dabei kann mittels der Belastungsmaschine 20 im Zugbetrieb der gesamte Leistungsbereich der Brennkraftmaschine 7 dargestellt und die damit verbundenen Belastungen erzeugt werden. Ferner kann die Brennkraftmaschine 7 mittels der Belastungsmaschine 20 geschleppt werden, womit im Schiebebtrieb auftretende Belastungen simuliert werden können. Die Simulation von Lastwechsel ermöglicht schockartige Änderungen der Abgastemperatur, die Ausdehungsunterschiede in der Abgasleitung und damit zusätzliche Wärmespannungen ergeben.

Mit dem Prüfstand 1 kann die Abgasanlage 21 als ein geometrisch kompliziertes Gebilde, bestehend aus Töpfen unterschiedlicher Anzahl, Form und Gewicht (Katalysator) und räumlich verlegten Verbindungsrohren, die sich zudem über die gesamte Fahrzeuglänge erstrecken kann, realistisch getestet werden.

**Patentansprüche**

1. Arbeitsverfahren zur Untersuchung einer mit einer Brennkraftmaschine zusammenwirkenden Kfz-Einrichtung auf einem Prüfstand, wobei eine einen Profilträger (17) zur Anordnung von Tragelementen (15, 16) für die Verbindung mit fahrzeugidentischen Aufhängevorrichtungen (8, 9, 12, 13) umfassende Aufnahmevorrichtung (3) bewegbar geführt und durch mindestens einen steuerbaren Erreger (2, 2') zur Simulation von Fahrzeugbewegungen angeregt wird, und wobei ferner an der Kfz-Einrichtung (6, 21) zusätzlich durch einen gesonderten Erreger Brennkraftmaschinenbewegungen simuliert werden, dadurch gekennzeichnet, daß ein betriebsfähiger Kfz-Antriebsstrang (6) einschließlich einer betriebbaren Brennkraftmaschine (7) über fahrzeugidentische Aüfhängevorrichtungen (8, 9, 11, 13) fahrzeuggemäß in der Aufnahmevorrichtung (3) angeordnet wird, und daß die Brennkraftmaschine (7) als gesonderter Erreger dient und zur Belastungssimulation über ein fahrzeuggemäß plaziertes Achsgetriebe (14) des Kfz-Antriebsstranges (6) mit einer von der Aufnahmevorrichtung (3) räumlich getrennten, ortsfest angeordneten Belastungsmaschine (20) gekuppelt wird.

2. Arbeitsverfahren nach Anspruch 1, dadurch gekennzeichnet, daß die Brennkraftmaschine (7) mit einer fahrzeuggemäßen Abgasanlage (21) ausgerüstet wird.

3. Prüfstand zur Durchfürung des Arbeitsverfahrens nach Anspruch 1 oder 2, mit einer bewegbar geführten Aufnahmevorrichtung (3), die einen Profilträger (7) zur Anordnung von Tragelementen (15, 16) für die Verbindung mit fahrzeugidentischen Aufhängevorrichtungen (8, 9, 11, 13) umfaßt und die mit mindestens einem steuerbaren Erreger (2, 2') zur Simulation von Fahrzeugbewegungen in Antriebsverbindung steht, wobei ein betriebsfähiger Kfz-Antriebsstrang (6) einschließlich einer betriebbaren Brennkraftmaschine (7) vorgesehen ist, der über fahrzeugidentische Aufhängevorrichtungen (8, 9, 11, 13) fahrzeuggemäß in der Aufnahmevorrichtung (3) angeordnet werden kann, und wobei eine von der Aufnahmevorrichtung (3) räumlich getrennte Belastungsmaschine (20) ortsfest angeordnet ist, mit der die Brennkraftmaschine (7) über ein fahrzeuggemäß plaziertes Achsgetriebe (14) des Kfz-Antriebsstranges (6) gekuppelt werden kann, dadurch gekennzeichnet,

daß die Aufnahmevorrichtung (3) für die Trageelemente (15) auf eine Fahrzeugbreite beabstandete, parallele Profilträger (17) umfaßt,

die mit Schenkeln (22', 23', 24') von quer zu den Profilträgern angeordneten U-förmigen Untergestellen (22, 23, 24) fest verbunden sind und

daß ein die Stege (22'', 23'', 24'') der Untergestelle mittig verbindender Längsträger (25) die Aufnahmevorrichtung versteift.

4. Prüfstand nach Anspruch 3, dadurch gekennzeichnet, daß die Aufnahmevorrichtung (3) über in einem Radstand eines Fahrzeuges anordbare Servohydraulikzylinder (2, 2') sowie über räumlich verteilt angeordnete, mit feststehenden Standsäulen (5) gelenkig verbundene Führungsstreben (4, 4') räumlich beweglich gehalten ist.

5. Prüfstand nach den Ansprüchen 3 und 4, dadurch gekennzeichnet, daß die Aufnahmevorrichtung (3) im Bereich der Brennkraftmaschine (7) zwei entsprechend der Länge der Brennkraftmaschine beabstandete Untergestelle (22, 23) aufweist,

die miteinander über einen Abschnitt des Längsträgers (25) und zusätzlich durch in den Endbereichen der Stege (22'', 23'') fest angeordnete Längsgurte (26) in Verbindung stehen,

wobei ein Längsgurt zusätzlich eine Anschlußstelle für eine weitere Führungsstrebe (4') aufweist,

die mit einer am Profilträger (17) angreifenden Führungsstrebe (4) eine Parallelführung bildet.

6. Prüfstand nach einem oder mehreren der vorangehenden Ansprüche 3—5, dadurch gekennzeichnet, daß das im Bereich des Achsgetriebes (14) angeordnete Untergestell (24) in jedem Endbereich seines Steges (24'') zwei in gegenseitigen Abstand am jeweiligen Profilträger (17) angreifende Schenkel (24') aufweist.

7. Prüfstand nach den Ansprüchen 3—6, dadurch gekennzeichnet, daß die Aufnahmevorrichtung (3) jeweils mittels schnell lösbarer Kupplungen mit den Servohydraulikzylindern (2, 2') und Führungsstreben (4, 4') in Verbindung steht.

8. Prüfstand nach Anspruch 7, dadurch gekennzeichnet, daß die Aufnahmevorrichtung (3) mit lenkbare Räder oder Rollen aufweisenden Fahrwerken verbindbar ist.

9. Prüfstand nach den Ansprüchen 3 und 7, dadurch gekennzeichnet,

daß Armaturen (28) an der Aufnahmevorrichtung (3) im Bereich der Brennkraftmaschine (7) angeordnet sind,

die mit einer von der Aufnahmevorrichtung getrennt angeordneten Versorgungs-, Steuer- und Kontroll-Einheit (27) über frei bewegliche Leitungen für Betriebsstoffe der Brennkraftmaschine sowie Steuer- und Kontrolleinrichtungen einerseits und

weiteren, zur Brennkraftmaschine führenden Leitungen andererseits verbindbar sind.

10. Prüfstand nach den Ansprüchen 3 und 7, dadurch gekennzeichnet,

daß die Belastungsmaschine (20) für Zug- und Schubbetrieb vergesehen ist, und

mit einem Radantriebs-Wellenflansch (18) des Achsgetriebes (14) über eine Gleichlaufgelenkwelle (19) kuppelbar ist.

11. Prüfstand nach Anspruch 3, dadurch gekennzeichnet, daß die Aufnahmevorrichtung (3) aus Leichtmetall gefertigt ist.

**Revendications**

1. Procédé d'essai d'une installation de véhicule automobile coopérant avec un moteur à combustion interne, sur un banc d'essai,

un dispositif de réception (3) comprenant un profilé (17) pour recevoir des éléments de support (15, 16) pour la liaison avec des dispositifs de suspension (8, 9, 12, 13) indentiques à ceux du véhicule étant guidés de manière mobile et,

est excité par au moins un moyen d'excitation commandé (2, 2') pour simuler les mouvements du véhicule, et

des mouvements du moteur à combustion interne pouvant être simulés dans l'installation du véhicule (6, 21) par un moyen d'excitation particulier, caractérisé en ce que:

on met en place une chaîne de transmission de véhicule (6), susceptible de fonctionner y compris un moteur à combustion interne (7), fonctionnant par l'ntermédiaire de dispositifs de suspension (8, 9, 11, 13) indentiques à ceux du véhicule, en procédant comme dans le véhicule dans le dispositif de support (3),

le moteur à combustion interne (7) constitue un moyen d'excitation particulier et pour simuler la charge, on relie un moteur de mise en charge (20), à emplacement fixe, séparé dans l'espace du dispositif de support (3), pour simuler la charge par l'intermédiaire d'une transmission d'essieu (14) placée comme dans le véhicule pour la chaîne de transmission (6) du véhicule.

2. Procédé selon la revendication 1, caractérisé en ce que le moteur à combustion interne (7) est équipé d'un échappement (21) correspondant à celui d'un véhicule.

3. Banc d'essai pour la mise en oeuvre du procédé selon la revendication 1 ou 2,

comportant un dispositif de support (3) guidé de manière mobile, formé d'un profilé (7) pour recevoir des éléments de support (15, 16) pour la liaison avec des dispositifs de suspension (8, 9, 11, 13) identiques à ceux du véhicule et coopérant dans le sens de l'entraînement avec au moins un moyen d'excitation commandé (2, 2') pour simuler les mouvements du véhicule,

avec une chaîne de transmission de véhicule (6) susceptible de fonctionner, comprenant un moteur à combustion interne (7) fonctionnant, et qui peut être placé dans le dispositif de support (3) à la manière d'un véhicule par les dispositifs de suspension (8, 9, 11, 13) indentiques à ceux d'un véhicule et,

une machine de mise en charge (20) étant montée fixe, de façon séparée dans l'espace du dispositif de support (3), machine qui peut être couplée au moteur à combustion interne (7) par l'intermédiaire d'une transmission d'essieu (14) de la chaîne de transmission (6), transmission placée comme dans le véhicule, caractérisé en ce que:

le dispositif de support (3) comprend des profilés parallèles (17) pour les éléments de support (15) écartés de la largeur du véhicule,

des châssis inférieurs (22, 23, 24) en forme du U reliés solidairement aux branches (22', 23', 24') transversalement aux profilés et

une poutre longitudinale (25) reliant les entretoises (22', 23', 24') des châssis inférieurs en leur milieu, assurant la rigidification du dispositif de support.

4. Banc d'essai selon la revendication 3, caractérisé en ce que le dispositif de support (3) est porté de manière mobile dans l'espace par l'intermédiaire de vérins d'asservissement (2, 2') susceptibles d'être écartés de l'empâtement d'un véhicule ainsi qu'à des entretoises de guidage (4, 4') reliées de manière articulée à des colonnes (5), fixes, réparties dans l'espace.

5. Banc d'essai selon les revendications 3 et 4, caractérisé en ce que le dispositif de support (3) comporte deux châssis inférieurs (22, 23) écartés de la longueur du moteur à combustion interne, châssis qui sont prévus au niveau du moteur à combustion interne (7),

qui sont reliés par un segment de la poutre longitudinale (25) ainsi que par des ceintures longitudinales (26) prévues aux extrémités des entretoises (22'', 23''),

une ceinture longitudinale présentant en outre un point de raccordement pour une autre entretoise de guidage (4'),

celle-ci formant un guidage en parallèle avec l'entretoise de guidage (4) reliée au profilé (17).

6. Banc d'essai selon l'une ou plusieurs des revendications précédentes 3—5, caractérisé en ce que le châssis inférieur (24) prévu au niveau de l'essieu de transmission (14) comporte à chaque extrémité de son entretoise (24''), deux branches (24') reliées avec une distance réciproque, au profilé respectif (17).

7. Banc d'essai selon les revendications 3—6, caractérisé en ce que le dispositif de support (3) est respectivement relié par des moyens de liaison à ouverture rapide aux vérins hydrauliques d'asservissement (2, 2') et aux entretoises de guidage (4, 4').

8. Banc d'essai selon les revendication 7, caractérisé en ce que le dispositif de support (3) peut être relié à des trains de roulement comportant des roues directrices ou des galets.

9. Banc d'essai selon les revendications 3 et 7, caractérisé en ce que:

des robinets (28) sont prévus dans le dispositif de support (3) au niveau du moteur à combustion interne (7),

ces robinets sont reliés à un ensemble d'alimentation de commande et de contrôle (27) prévu de manière séparée du dispositif de support, la liaison étant assurée par des conduites libres pour le carburant alimentant le moteur à combustion interne ainsi que les lignes reliées aux installations de commande et de contrôle,

ces conduites et lignes étant reliées au moteur à combustion interne.

10. Banc d'essai selon les revendications 3 et 7, caractérisé en ce que:

la machine de mise en charge (20) est prévue pour fonctionner à la traction at à la poussée, et

cette machine peut être couplée à une bride d'arbre de roue motrice (18) de l'essieu (14) par un arbre à joint homocinétique (19).

11. Banc d'essai selon la revendication 3, caractérisé en ce que le dispositif de support (3) est réalisé en métal léger.

**Claims**

1. A method of testing motor vehicle equipment cooperating with an internal combustion engine on a test stand, comprising

a holding device comprising a sectional girder (17) for carrying supporting elements (15, 16) for connecting to suspension devices (8, 9, 12, 13) identical with those on a vehicle being movably guided and

energised by at least one controllable exciter (2, 2') for simulating movements of the vehicle, and movements of the internal combustion engine being also simulated on the motor-vehicle equipment (6, 21) by an additional exciter, characterised in that,

an operative motor-vehicle drive mechanism (6) including a drivable internal combustion engine (7) is disposed in the holding device (3) in a vehicle and via suspension devices (8, 9, 11, 13) identical with those in a vehicle, and

the internal combustion engine (7) serves as a separate exciter and, in order to simulate a load, is coupled to a loading machine (20) disposed in a stationary position and spatially separate from the holding device (3), the coupling being via an axle drive (14) of the motor vehicle drive mechanism (6) disposed as in a vehicle.

2. A method according to claim 1, characterised in that the internal combustion engine (7) is equipped with an exhaust-gas system (21) as in a vehicle.

3. A test stand for working the method according to claim 1 or 2,

comprising a movably guided holding device (3) comprising a sectional girder (7) for carrying supporting elements (15, 16) for connecting to suspension devices (8, 9, 11, 13) identical with those on a vehicle and in drive connection with at least one controllable exciter (2, 2') for simulating movements of the vehicle,

an operative motor vehicle drive mechanism (6) including a drivable internal combustion engine (7) being provided and adapted to be disposed in the holding device (3) as in a vehicle via suspension devices (8, 9, 11, 13) identical with those in a vehicle, and

a loading machine (20) spatially separate from the holding device (3) being disposed in a stationary position and adapted to be coupled to the internal combustion engine (7) via an axle drive (14) of the motor vehicle drive mechanism (6) disposed as in a vehicle, characterised in that

the holding device (3) for the supporting elements (15) comprises parallel sectional girders spaced apart by the width of a vehicle and

firmly connected to legs (22', 23', 24') of U-shaped underframes (22, 23, 24) disposed transversely to the sectional girders, and

the holding device being reinforced by a longitudinal girder (25) connecting the middle parts of the webs (22'', 23'', 24'') of the underframes.

4. A test stand according to Claim 3, characterised in that the holding device (3) is held so as to be movable in three dimensions via a servohydraulic cylinder (2, 2') disposed in a wheel base of a vehicle and via guide struts (4, 4') distributed in three dimensions and pivotably connected to stationary upright columns (5).

5. A test stand according to claims 3 and 4, characterised in that the holding device (3) has two underframes (22, 23) near the internal combustion engine (7) and separated by a distance equal to the length thereof,

the underframes being interconnected via a portion of the longitudinal girder (25) and also by longitudinal booms (26) disposed in the end regions of the webs (22'', 23''),

one longitudinal boom also having a place for connecting an additional guide strut (4'),

which forms a parallel guide in cooperation with a guide strut (4) engaging the sectional girder (17).

6. A test stand according to one or more of the preceding claims 3—5, characterised in that the underframe (24), disposed near the axle drive (14), has two legs (24') spaced apart and engaging the respective sectional girder (17) at each end region of the web (24'').

7. A test stand according to claims 3—6, characterised in that the holding device (3) is connected to the servohydraulic cylinders (2, 2') and guide struts (4, 4') via respective rapid-release couplings.

8. A test stand according to claim 7, characterised in that the holding device (3) can be connected to running gear comprising steerable wheels or rollers.

9. A test stand according to claims 3 and 7, characterised in that

fittings (28) are disposed on the holding device (3) near the internal combustion engine (7),

and are connectable to a supply control and monitoring unit (27) disposed separately from the holding device via freely movable lines for engine fuels and control and monitoring devices on the one hand and

via other lines leading to the engine.

10. A test stand according to claims 3 and 7, characterised in that

the loading machine (20) is adapted for traction and thrust operation, and

can be coupled via a synchronising cardan shaft (19) to a wheel drive flange (18) on the axle gear ring (14).

11. A test stand according to claim 3, characterised in that the holding device (3) is made of light metal.